# EUROPEAN PATENT SPECIFICATION

(11) **EP 1 469 239 B1**
(45) Date of publication and mention of the grant of the patent: **07.11.2007**
(21) Application number: 04008689.4
(22) Date of filing: 10.04.2004
(51) Int. Cl.: F16J 15/32, B60T 8/32, B60B 27/00, G01P 3/44

(54) **A bearing for a wheel of vehicle**
Radlager für Fahrzeuge
Palier de roue pour vehicule

(30) Priority: 17.04.2003 JP 2003112329; 20.06.2003 JP 2003176574
(43) Date of publication of application: 20.10.2004
(60) Divisional application: 07103508.3
(73) Proprietor: NTN Corporation, Osaka (JP)
(72) Inventor: Ohtsuki, Hisashi, Iwata-shi Shizuoka-ken (JP); Nishino, Koji, Iwata-shi Shizuoka-ken (JP)
(74) Representative: Cohausz & Florack

(56) References cited:
- US-A- 5 407 213
- US-A- 5 431 413
- US-A- 5 611 545
- PATENT ABSTRACTS OF JAPAN vol. 2000, no. 25, 12 April 2001 (2001-04-12) & JP 2001 215132 A (NTN CORP), 10 August 2001 (2001-08-10)

## Description

### BACKGROUND OF THE INVENTION

### Field of the Invention

The present invention relates to a bearing for rotatably supporting a wheel of vehicle such as an automobile relative to a body of vehicle and more particularly to an improvement of a sealing structure to which a magnetic encoder for detecting the speed of wheel rotation is integrally mounted.

### Description of Background Art

It has been known to those skilled in the art the bearing for a wheel of vehicle having a sealing device to which a magnetic encoder for detecting the rotation speed of wheel is integrally mounted.

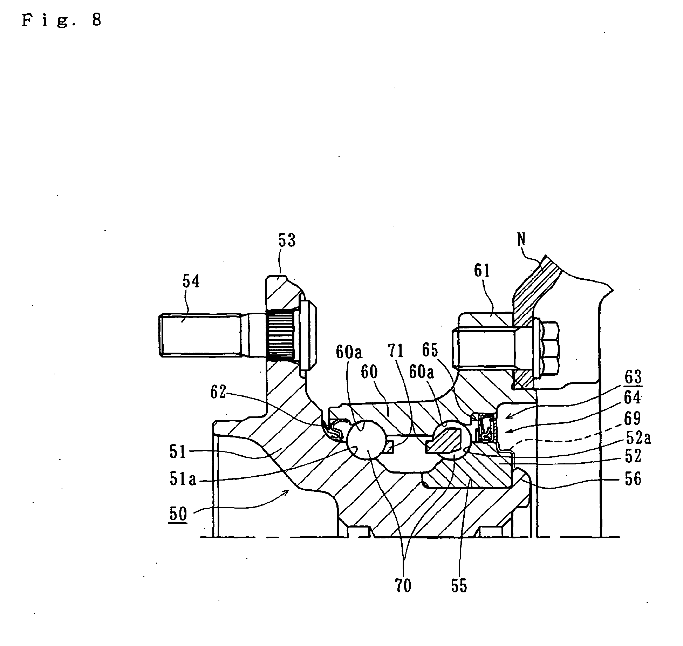

Fig. 8 is a cross-section view of a bearing for a wheel of vehicle of the prior art comprising an inner member 50, an outer member 60, and double row rolling elements 70 and 70 arranged between the inner and outer members 50 and 60. The inner member 50 comprises a hub wheel 51 and an inner ring 52 fitted on the hub wheel 51. The hub wheel 51 is formed integrally with a wheel mounting flange 53 for mounting a wheel (not shown) thereon and hub bolts 54 for securing the wheel are equidistantly arranged along the periphery of the flange 53. The inner ring 52 is press-fitted on a stepped portion 55 of small diameter formed on the hub wheel 51. The end of the stepped portion 55 is plastically deformed radially outward to form a caulked portion 56 for preventing the inner ring 52 from being axially felt out from the hub wheel 51.

The outer member 60 is formed integrally with a body mounting flange 61 to be mounted on a knuckle "N" at the periphery thereof and also formed with double row outer raceway surfaces 60a and 60a at an inner circumferential surface oppositely to the inner raceway surfaces. In the inner member 50, double row inner raceway surfaces 51a and 52a are formed on the outer circumferential surfaces of the hub wheel 51 and the inner ring 52 respectively oppositely to the double row outer raceway surfaces 60a and 60a of the outer member 60. Double row rolling elements (balls) 70 and 70 are arranged between the outer and inner raceway surfaces 60a and 51a; 60a and 52a; and held to be freely rolled by cages 71 and 71. Sealing devices 62 and 63 are mounted on the ends of the outer member 60 for preventing leak of lubricating grease contained within the bearing and also preventing penetration of rain water or dusts into the bearing from the ambient circumstance. The bearing having such a structure is called a "third generation".

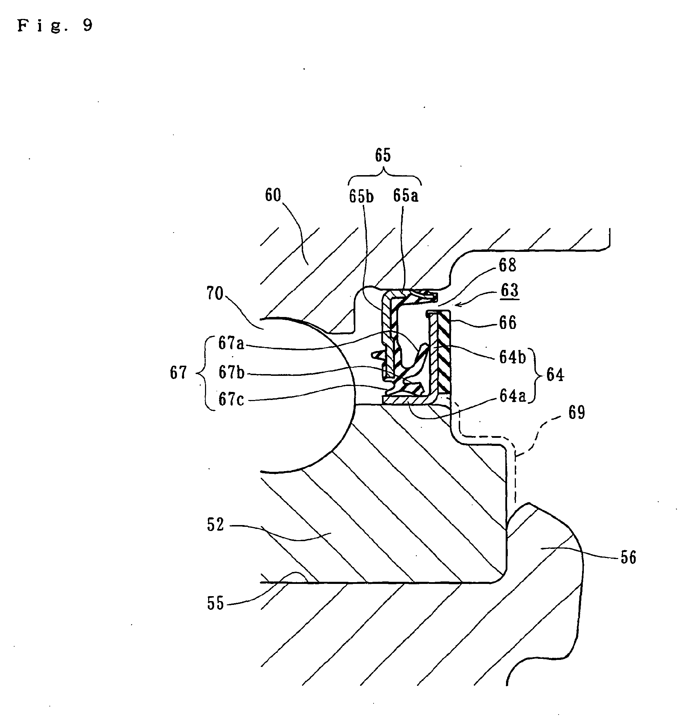

In such a bearing for a wheel of vehicle, the sealing device 63, as clearly shown in an enlarged view of Fig. 9, has first and second annular sealing plates 64 and 65 mounted on the inner ring 52 and the outer member 60 respectively. Each of these sealing plates 64 and 65 has a substantially "L"-shaped cross-section formed respectively by a cylindrical portion 64a and 65a and a radially extending portion 64b and 65b and the sealing plates 64 and 65 are arranged oppositely to each other. The radially extending portion 64b of the first sealing plate 64 has an encoder 66 for detecting the wheel rotation speed bonded thereto via vulcanization at inboard side of the bearing. The encoder 66 is made of rubber magnet in which magnetic substance powder is mingled and N and S poles are alternately magnetized along the circumferential direction of the encoder.

The second sealing plate 65 has a sealing member 67 bonded thereto via vulcanization having an integrally formed side-lip 67 slide-contacting with the radially extending portion 64b and other integrally formed radial-lips 67b and 67c slide-contacting with the cylindrical portion 64a. A tip of the radially extending portion 64b of the first sealing plate 64 is opposed to the cylindrical portion 65a of the second sealing plate 65 with keeping a slight radial gap therebetween forming a labyrinth seal 68.

Although the first sealing plate 64 forming a slinger is press-fitted on the outer circumferential surface of the inner ring 52, traces of water would penetrate into the inside of bearing through the fitted portion. Such a penetration of water causes not only degradation of the lubricating grease and thus life reduction of the bearing but generation of rust in the first sealing plate 64 and thus wear of the sealing lips.

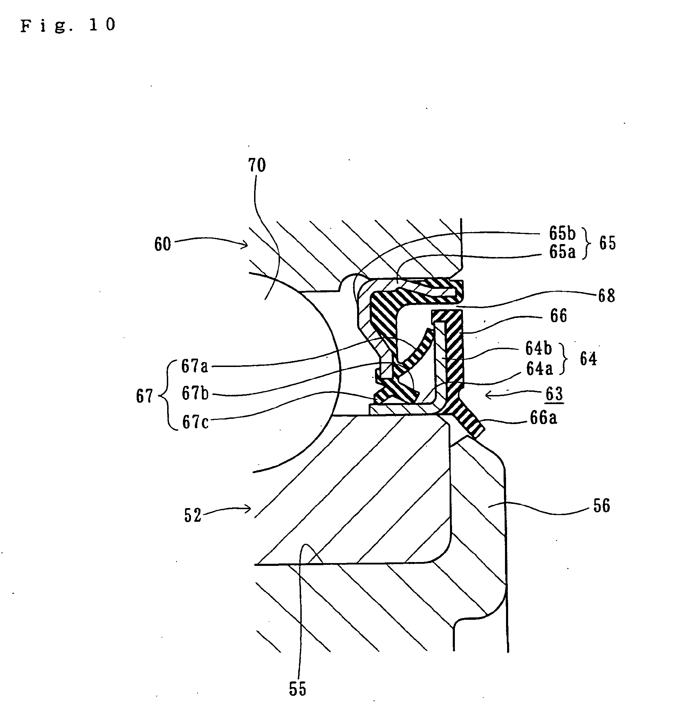

For solving this problem, the applicant of the present invention has proposed in JP 2001 215 132 A, that forms the closest prior, according to the preamble of claim 1, a sealing structure shown in Fig. 10. According to this sealing structure, a projected piece 66a extending from the encoder 66 elastically contacts with the caulked portion 56 to seal an exposed surface 69 (see Fig. 9) of the inner ring 52 and also to prevent water from penetrating into the bearing through the abutted surface between the end face of the inner ring 52 and the caulked portion 56.

However, since the rubber magnet member forming the encoder 66 is mingled with a great deal of magnetic powder, it becomes not only expensive but lack of appropriate elasticity. In addition, hoop stress would be sometimes caused between the fitted surfaces of the inner ring 52 and the sealing plate 64 by the radial plastic deformation of the stepped portion 55 of small diameter due to caulking working. If corrosion would proceed in this fitted portion under such a circumstance, the diffusible hydrogen existing in nature will penetrate into the metallographic structure of the inner ring 52 and destroy the metallic grain boundancy thereof and thus cause undesirable so-called "delayed fracture".

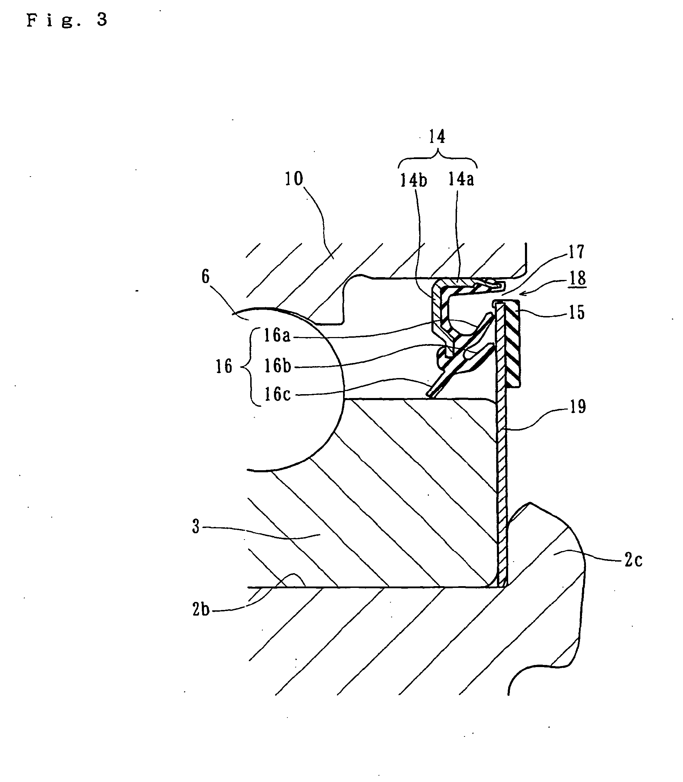

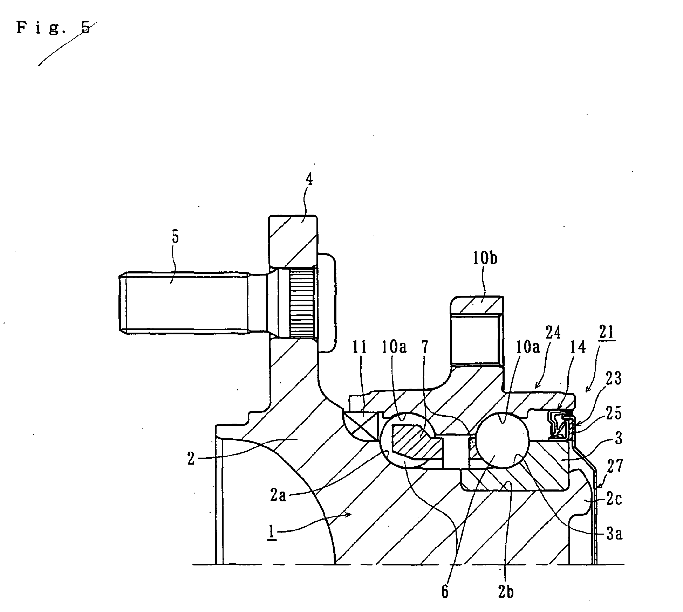

In addition, since the surface of the encoder 66 is exposed to the circumstance and arranged oppositely to a speed sensor (not shown) via a predetermined gap thereto, dusts or sands would penetrate into the gap and wear their surfaces. Increase of the air gap between the encoder 66 and the speed sensor caused by the wear of them causes reduction of the accuracy of detection. US-A-5 431 413 regards to a seal incorporating a magnetic encoder. The seal comprises a disk which holds the magnetic encoder. In some embodiments disclosed therein, shown in Figs. 3 and 5, the seal is mounted on bearing with a rotating inner ring and a fixed outer ring. However, the seal disclosed in US-A-5 431 413, when mounted on a bearing, is only mounted between the inner ring and the outer ring. Thus, there is always an exposed portion of the inner ring which is not covered by the disk.

### SUMMARY OF THE INVENTION

It is, therefore, an object of the present invention to provide a bearing for a wheel of vehicle having a magnetic encoder which can prevent the penetration of water through the fitted portion of the sealing plate to improve the life of bearing and also can protect the encoder.

For achieving the object mentioned above, there is provided a bearing for a wheel of vehicle comprising an inner member including a hub wheel integrally formed with a wheel mounting flange at one end thereof and also formed with an inner raceway surface at an outer circumferential surface and a stepped portion of small diameter axially extending from the inner raceway surfaces as well as including an inner ring fitted on the stepped portion and formed with an another inner raceway surface at an outer circumferential surface thereof; an outer member integrally formed with a body mounting at the periphery thereof and also formed with double row outer raceway surfaces at an inner circumferential surface oppositely to the inner raceway surfaces; double row rolling elements arranged between the outer and inner members; and sealing devices for sealing annular spaces between the outer and inner members; the inner ring is secured to the hub wheel so as not to be moved axially relative to the hub wheel by a caulked portion formed by plastically deforming radially outward the end of the stepped portion of small diameter of the hub wheel, CHARACTERIZED in that: an sealing device of inboard side of the sealing devices comprises a first sealing plate arranged on the inner ring and a second sealing plate arranged on the outer member oppositely to the first sealing plate; the first sealing plate has a radially extending portion arranged at inboard side of the bearing; bonded on the radially extending portion of the first sealing plate is elastomer material with which magnetic substance powder is mingled and in which N and S poles are alternately magnetized along the circumferential direction thereof; the second sealing plate has a substantially "L"-shaped cross-section formed by a cylindrical portion and a radially extending portion and is integrated with side-lip(s) slide-contacting with the radially extending portion of the first sealing plate; the tip of the radially extending portion of the first sealing plate is positioned with keeping a slight radial gap relative to the cylindrical portion of the second sealing plate; and the exposed portion of the inner ring is covered by the first sealing plate.

According to the characterized features of the sealing device of the bearing for a wheel of vehicle of the third generation of the present invention it is possible to prevent penetration of rain water or dusts into the bearing from the ambient circumstance. In addition, since the fitted portion as well as the inner ring are not exposed to the ambient circumstance, it is also possible to prevent progression of corrosion in these portions, penetration of diffusible hydrogen existing in nature into the metallographic structure of the inner ring 52 and destroy the metallic grain boundancy thereof and thus generation of undesirable delayed fracture.

It is preferable that the first sealing plate is formed as a cap having a fitted portion to be press-fitted on the outer circumferential surface of the inner ring and a bottom portion for covering the caulked portion. This structure prevents the fitted portion as wall as the abutted portion between the end face of the inner ring and the caulked portion from being exposed to the ambient circumstance.

It is also preferable that the first sealing plate is formed as a disk configuration to be abutted to the end face of the inner ring and is secured thereto by the caulked portion of the hub wheel. This structure prevents the fitted portion as wall as the inner ring from being exposed to the ambient circumstance and thus generation of rust in the fitted portion of the inner ring.

It is preferable that the first sealing plate has a fitted portion to be press-fitted on the outer circumferential surface of the inner ring and a fixed portion to be secured to the end face of the inner ring by the caulked portion of the hub wheel, and a recess for containing the fixed portion is formed on the caulked portion. This structure can suppress minimum the deformation of the first sealing plate caused by the plastic deformation for forming the caulked portion.

It is also preferable that the elastomer material is bonded to the first sealing plate over a region from the radially outermost end of the radially extending portion to a point of radially inward beyond the outer circumferential surface of the inner ring. This structure enables increase of the area of encoder and thus the magnetic force.

According to the characterized features of the sealing device of the bearing for a wheel of vehicle mentioned above, it is possible to obtain excellent sealing ability, to prevent penetration of rain water or dusts into the bearing from the ambient circumstance and thus damage of the surface of encoder, and accordingly to keep the detecting accuracy unchanged. In addition, it is also possible to reduce the air gap between the encoder and the vehicle speed detecting sensor and thus to improve the detecting accuracy as compared with the structure having the separate cover for covering the sealing device.

It is preferable that the protecting cover has a cylindrical portion mounted on the outer circumferential surface of the first sealing plate and a radially extending portion extending radially inward from the end of the cylindrical portion and contacted with the surface of the encoder. This structure is simple and thus enables the assembly easy. In addition, it is possible to reduce the air gap between the encoder and the vehicle speed detecting sensor and thus to improve the detecting accuracy.

It is also preferable that the first sealing plate is formed as a cap integrally formed with a cylindrical portion formed by folding a portion of the radially extending portion and being mounted on the outer circumferential surface of the inner ring, and a bottom portion for covering the caulked portion. According to this structure, since the fitted portion as well as the inner ring are not exposed to the ambient circumstance, it is possible to prevent progression of corrosion in these portions, penetration of diffusible hydrogen existing in nature into the metallographic structure of the inner ring 52 and destroy the metallic grain boundancy thereof and thus generation of undesirable delayed fracture.

It is preferable that the protecting cover is formed as a cap integrally formed with a cylindrical portion mounted on the outer circumferential surface of the inner ring, a radially extending portion extending radially inward from the end of the cylindrical portion and contacted with the surface of the encoder. According to this structure, it is possible to prevent progression of corrosion in these portions, penetration of diffusible hydrogen existing in nature into the metallographic structure of the inner ring 52 and destroy the metallic grain boundancy thereof and thus generation of undesirable delayed fracture. In addition, since the surface of encoder is covered by the radially extending portion of the protecting cover made of non-magnetic material, it is possible to prevent damage of the surface of encoder.

It is preferable that the protecting cover is secured to the first sealing portion by a caulked portion formed on the cylindrical portion of the protecting cover. This structure enables to more positively secure the protecting cover to the outer circumferential surface of the first sealing plate.

It is also preferable that the protecting cover is formed by press forming of a non-magnetic steel sheet or by injection molding of synthetic resin.

It is preferable that the second sealing plate is integrally formed with radial-lip(s) directly slide-contacting with the outer circumferential surface of the inner ring. Compact design of the second sealing plate can be attained by this structure without any restriction as to shape or dimension of the bearing space or sealing plates. The radial-lips can prevent leak of lubricating grease contained within the bearing and also penetration of rain water or dusts into the bearing from the ambient circumstance.

### Effects obtained by the invention

As previously stated, there is provided a bearing for a wheel of vehicle comprising an inner member including a hub wheel integrally formed with a wheel mounting flange at one end thereof and also formed with an inner raceway surface at an outer circumferential surface and a stepped portion of small diameter axially extending from the inner raceway surfaces as well as including an inner ring fitted on the stepped portion and formed with an another inner raceway surface at an outer circumferential surface thereof; an outer member integrally formed with a body mounting at the periphery thereof and also formed with double row outer raceway surfaces at an inner circumferential surface oppositely to the inner raceway surfaces; double row rolling elements arranged between the outer and inner members; and sealing devices for sealing annular spaces between the outer and inner members; the inner ring is secured to the hub wheel so as not to be moved axially relative to the hub wheel by a caulked portion formed by plastically deforming radially outward the end of the stepped portion of small diameter of the hub wheel, CHARACTERIZED in that: an sealing device of inboard side of the sealing devices comprises a first sealing plate arranged on the inner ring and a second sealing plate arranged on the outer member oppositely to the first sealing plate; the first sealing plate has a radially extending portion arranged at inboard side of the bearing; bonded on the radially extending portion of the first sealing plate is elastomer material with which magnetic substance powder is mingled and in which N and S poles are alternately magnetized along the circumferential direction thereof; the second sealing plate has a substantially "L"-shaped cross-section formed by a cylindrical portion and a radially extending portion and is integrated with side-lip(s) slide-contacting with the radially extending portion of the first sealing plate; the tip of the radially extending portion of the first sealing plate is positioned with keeping a slight radial gap relative to the cylindrical portion of the second sealing plate; and the exposed portion of the inner ring is covered by the first sealing plate. According to the characterized features of the sealing device of the bearing for a wheel of vehicle of the present invention it is possible to prevent penetration of rain water or dusts into the bearing from the ambient circumstance. In addition, since the fitted portion as well as the inner ring are not exposed to the ambient circumstance, it is also possible to prevent progression of corrosion in these portions, penetration of diffusible hydrogen existing in nature into the metallographic structure of the inner ring 52 and destroy the metallic grain boundancy thereof and thus generation of undesirable delayed fracture. In addition the air gap between the encoder and the vehicle speed detecting sensor is reduced and thus to improve the detecting accuracy as compared with the structure having the separate cover for covering the sealing device.

### Best mode for carrying out the invention

A bearing for a wheel of vehicle comprising an inner member including a hub wheel integrally formed with a wheel mounting flange at one end thereof and also formed with an inner raceway surface at an outer circumferential surface and a stepped portion of small diameter axially extending from the inner raceway surfaces as well as including an inner ring fitted on the stepped portion and formed with an another inner raceway surface at an outer circumferential surface thereof; an outer member integrally formed with a body mounting flange at the periphery and also formed with double row outer raceway surfaces at an inner circumferential surface oppositely to the inner raceway surfaces; double row rolling elements arranged between the outer and inner members; and sealing devices for sealing annular spaces between the outer and inner members; the inner ring is secured to the hub wheel so as not to be moved axially relative to the hub wheel by a caulked portion formed by plastically deforming radially outward the end of the stepped portion of small diameter of the hub wheel, CHARACTERIZED in that: a sealing device of inboard side of the sealing devices comprises a first sealing plate arranged on the inner ring and a second sealing plate arranged on the outer member oppositely to the first sealing plate; the first sealing plate has a radially extending portion arranged at inboard side of the bearing; bonded on the radially extending portion of the first sealing plate is an encoder in which magnetic substance powder is mingled and N and S poles are alternately magnetized along the circumferential direction thereof; the second sealing plate has a substantially "L"-shaped cross-section formed by a cylindrical portion and a radially extending portion and is integrated with side-lip(s) slide-contacting with the radially extending portion of the first sealing plate; a protecting cover is mounted on the first sealing plate; the protecting cover is formed as a cap integrally formed with a cylindrical portion mounted on the outer circumferential surface of the first sealing plate, a radially extending portion extending radially inward from the end of the cylindrical portion and intimately contacted with the surface of the encoder, and the protecting cover positioned with keeping a slight radial gap relative to the cylindrical portion of the second sealing plate.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal-section view of a first embodiment of a bearing for a wheel of vehicle of the present invention;
Fig. 2 is a partially enlarged longitudinal-section view of Fig. 1;
Fig. 3 is a partially enlarged longitudinal-section view of a second embodiment of a bearing for a wheel of vehicle of the present invention;
Fig. 4 is a partially enlarged longitudinal-section view of a third embodiment of a bearing for a wheel of vehicle of the present invention;
Fig. 5 is a longitudinal-section view of a fourth embodiment of a bearing for a wheel of a vehicle, that does not form part of the invention.
Fig 6 (a) is a partially enlarged longitudinal-section view of Fig. 5, and Fig. 6 (b) is a modified embodiment of Fig. 6 (a);
Fig. 7 (a) is a partially enlarged longitudinal-section view of a fifth embodiment of a bearing for a wheel of vehicle of the present invention, and Fig. 7 (b) is a modified embodiment of Fig. 7 (a);
Fig. 8 is a longitudinal-section view of a bearing for a wheel of vehicle of the prior art;
Fig. 9 is a partially enlarged longitudinal-section view of Fig. 8; and
Fig. 10 is a longitudinal-section view of another bearing for a wheel of vehicle of the prior art.

### DESCRIPTION OF THE PREFERRED EMBODIMENTS

Preferred embodiments of the present invention will be described with reference to accompanied drawings.

### First Embodiment

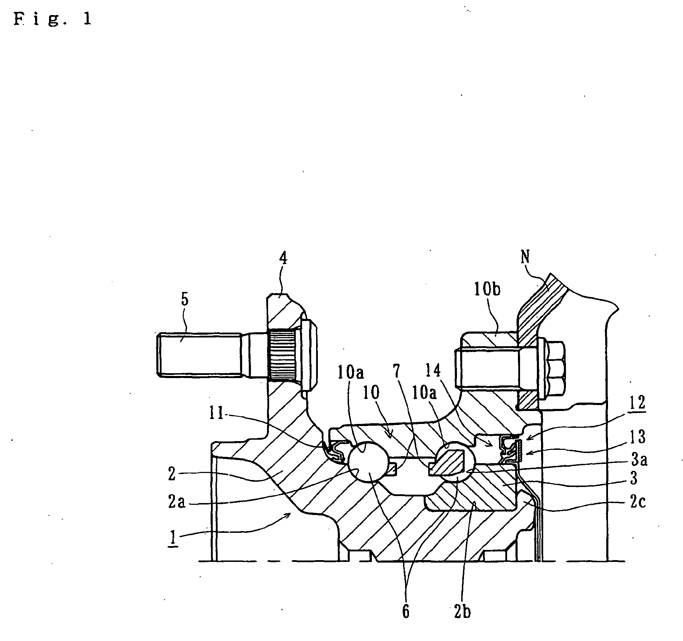

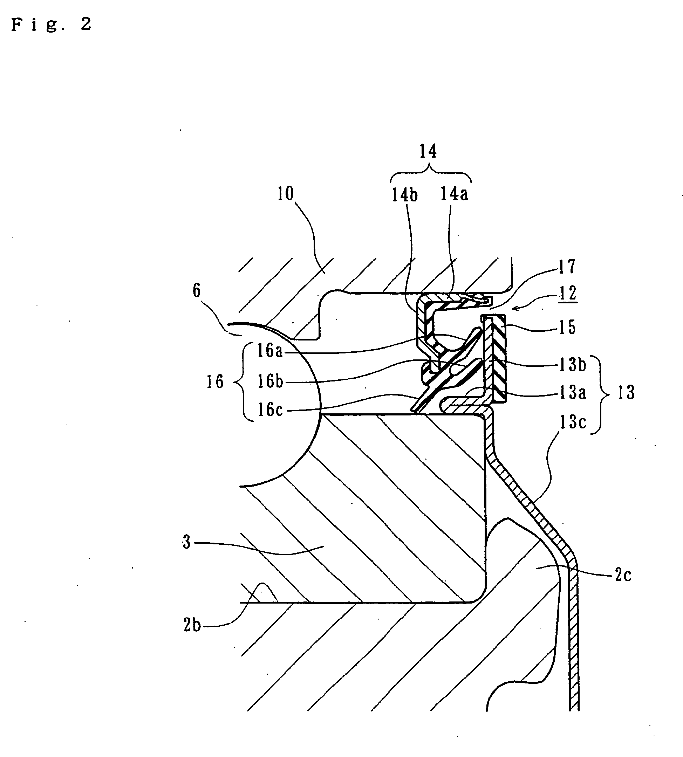

Fig. 1 is a longitudinal-section view of a first embodiment of a bearing for a wheel of vehicle of the present invention, and Fig. 2 is a partially enlarged longitudinal-section view of Fig. 1. In the description of the present invention, a side of a bearing positioned outward a vehicle when it is mounted on a vehicle is referred to as "outboard" side (the left side in a drawing), and a side inward a vehicle is referred to as "inboard" side (the right side in a drawing).

The bearing of Fig. 1 comprises an inner member 1, an outer member 10, and double row rolling elements 6 and 6 held between the inner and outer members 1 and 10. The inner member 1 includes a hub wheel 2 and a separate inner ring 3 fitted on the outer circumferential surface of the hub wheel 2. The hub wheel 2 is formed integrally with a wheel mounting flange 4 for mounting a wheel (not shown) thereon and hub bolts 5 for securing the wheel are equidistantly arranged along the periphery of the flange 4. The inner ring 3 is press-fitted on a stepped portion 2b of small diameter formed on the hub wheel 2. The end of the stepped portion 2b is plastically deformed radially outward to form a caulked portion 2c for preventing the inner ring 3 from being axially felt out from the hub wheel 2.

The outer member 10 is formed integrally with a body mounting flange 10b to be mounted on a knuckle "N" at the periphery thereof and also formed with double row outer raceway surfaces 10a and 10a at an inner circumferential surface oppositely to the inner raceway surfaces. In the inner member 1, double row inner raceway surfaces 2a and 3a are formed on the outer circumferential surfaces of the hub wheel 2 and the inner ring 3 respectively oppositely to the double row outer raceway surfaces 10a and 10a of the outer member 60. Double row rolling elements (balls) 6 and 6 are arranged between the outer and inner raceway surfaces 10a and 2a; 10a and 3a; and held to be rolled by cages 7 and 7. Sealing devices 11 and 12 are mounted on the ends of the outer member 10 for preventing leak of lubricating grease contained within the bearing and also preventing penetration of rain water or dusts into the bearing from the ambient circumstance. The bearing having such a structure is called a "third generation". Although there is illustrated a double row angular ball bearing, a double row tapered roller bearing may be also used.

The hub wheel 2 is made of medium carbon steel such as S53C including carbon of 0.40 - 0.80 wt%. The inner raceway surface 2a of outboard side, the seal land portion with which the sealing device 11 slide-contacts, and the stepped portion 2b of small diameter are heat treated by the high frequency induction heating as having a surface hardness of HRC 58 - 64. The caulked portion 2c is remained as no heat treated portion having a surface hardness less than HRC 24 after forging. On the contrary, the inner ring 3 is made of high carbon chrome bearing steel such as SUJ 2 and is hardened to its core by dipping quenching as having a surface hardness of HRC 54 ~ 64.

The inner member 10 is made of medium carbon steel such as S53C including carbon of 0.40 - 0.80 wt%. The double row outer raceway surface 10a and 10a and the inner circumferential surface of the end of the outer member to which the sealing devices 11 and 12 are fitted are heat treated by the high frequency induction heating as having a surface hardness of HRC 58 - 64.

As clearly shown in Fig. 2, the sealing device 12 of inboard side has first and second sealing plates 13 and 14 mounted on the inner ring 3 and the outer member 10 respectively. The first sealing plate 13 is formed as a cap integrally formed with a fitted portion 13a formed by folding a portion of the radially extending portion and being mounted on the outer circumferential surface of the inner ring, a radially extending portion 13b extending radially outwardly from the end of the fitted portion 13a, and a bottom portion 13c for covering the caulked portion 2c. The first sealing plate 13 is made by press working of ferrite-stainless steel sheet (e.g. JIS SUS 430 etc.) or preserved cold rolled steel sheet (e.g. JIS SPCC etc.). Bonded by vulcanization integrally on the radially extending portion 13b at its inboard side is a rotary encoder 15 for detecting the speed of wheel rotation made of elastomer material such as rubber with which magnetic substance powder such as ferrite powder is mingled and in which N and S poles are alternately magnetized at a predetermined pitch on the pitch circle diameter (PCD) along the circumferential direction thereof.

The second sealing plate 14 is made of austenitic-stainless steel sheet (e.g. JIS SUS 304 etc.) or preserved cold rolled steel sheet (e.g. JIS SPCC etc.) and has a cylindrical portion 14a and a radially extending portion 14b to form a substantially "L" shaped configuration by press working. Bonded by vulcanization on the second sealing plate 14 is a sealing member 16 integrally formed by side-lips 16a and 16b slide-contacting with the radially extending portion 13b of the first sealing plate 13 and a radial-lip 16c slide-contacting with the outer circumferential surface of the inner ring 3. Accordingly, this radial lip 16c makes it possible to positively prevent penetration of rain water or dusts into the bearing from the ambient circumstance without any restriction. A tip of the radially extending portion 13b of the first sealing plate 13 is opposed to the cylindrical portion 14a of the second sealing plate 14 with keeping a slight radial gap therebetween forming a labyrinth seal 17.

Although it is illustrated the structure having a pair of side-lips 16a and 16b and the radial-lip 16c, any other structure such as one having single side-lip and a pair of radial-lips in accordance with objects or a space of the sealing device. In addition, it is also possible to provide a pair of radial-lips 16c and to have one of them slide-contacted with the outer circumferential surface of the fitted portion 13a.

According to the first embodiment, since the first sealing plate 13 is formed as the cap configuration having the bottom portion 13c as well as the fitted portion 13a of folded structure is press-fitted on the outer circumferential surface of the inner ring 3, the fitted surfaces, inner ring 3, and the abutted surfaces between the inner ring 3 and the caulked portion 2c are never exposed to the ambient circumstance and thus it is possible to prevent generation of delayed fracture due to penetration of the diffusible hydrogen existing in the ambient circumstance into metallographic structure of the inner ring 3 when corrosion would proceed in these fitted portions.

### Second embodiment

A second embodiment of the bearing for a wheel of vehicle is shown in a partially enlarged view of Fig. 3. Since difference of this embodiment from the first embodiment only resides in the structure of the first sealing plate, same numerals are used as those used in the first embodiment for designating the same structural elements.

Similarly to the first embodiment, the second sealing plate 14 is mounted on the outer member 10, however a first sealing plate 19 of a sealing device 18 of inboard side of this embodiment is formed as a disk configuration and sandwiched between the end face of the inner ring 3 and the caulked portion 2c. The first sealing plate 19 is made by press working of ferrite-stainless steel sheet (e.g. JIS SUS 430 etc.) or preserved cold rolled steel sheet (e.g. JIS SPCC etc.). Bonded by vulcanization integrally on the radially outward end of the first sealing plate 19 at its inboard side is a rotary encoder 15 made of elastomer material with which magnetic substance powder is mingled.

According to this second embodiment, since the first sealing plate 19 is formed as a disk and integrally secured to the end face of the inner ring 3 by plastically deforming the end of the stepped portion 2b of the hub wheel 2, no rain water or dusts penetrates into the bearing from the ambient circumstance and the fitted surfaces and the inner ring 3 are not exposed to the ambient circumstance. Accordingly, the delayed fracture of the inner ring 3 can be positively prevented.

### Third embodiment

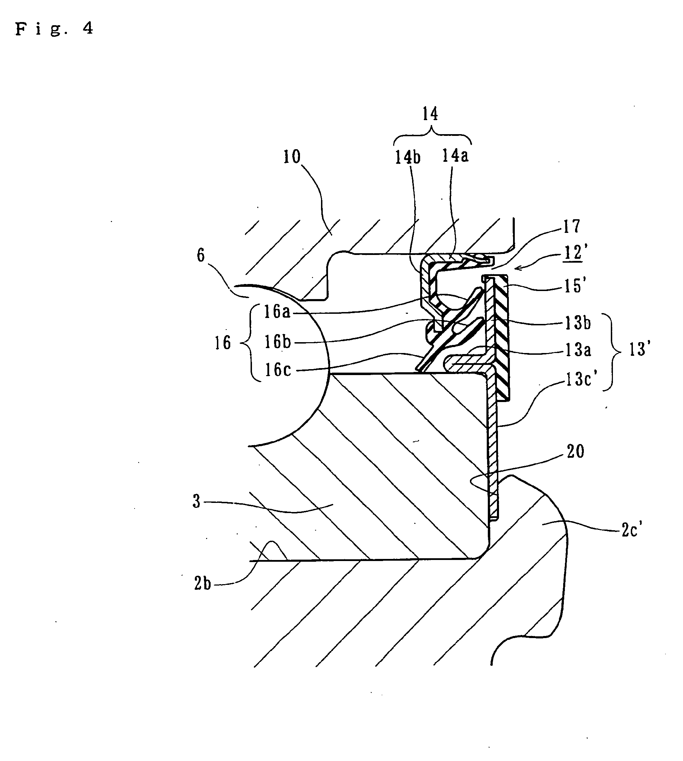

A third embodiment of the bearing for a wheel of vehicle is shown in a partially enlarged view of Fig. 4. Since difference of this embodiment from the second embodiment (Fig. 3) only resides in the structure of the first sealing plate and the caulked portion, same numerals are used as those used in the previous embodiments for designating the same structural elements.

Similarly to the first and second embodiments, the second sealing plate 14 of a sealing device 12' of inboard side of this embodiment is mounted on the outer member 10. On the other hand, a first sealing plate 13' comprises the fitted portion 13a formed by folding, a radially extending portion 13b extending radially outward from the fitted portion 13a, and a disk shaped fixed portion 13c' abutted to the end face of the inner ring 3. The first sealing plate 13' is integrally secured to the end face of the inner ring 3 by press-fitting the folded portion 13a onto the outer circumferential surface and by plastically deforming the end of the stepped portion 2b of the hub wheel 2 to form the caulked portion 2c'. A recess 20 for containing the fixed portion 13c' is previously formed on the surface of the caulked portion 2c' in order to minimize deformation of the first sealing plate 13' during the plastically deforming working. Bonded integrally on the first sealing plate 19 at its inboard side beyond the radially outward end thereof is an encoder 15' made of elastomer material with which magnetic substance powder is mingled.

Similarly to the previous embodiments, in this embodiment, no rain water or dusts penetrates into the bearing from the ambient circumstance, Since the fitted surfaces and the inner ring 3 are not exposed to the ambient circumstance, the delayed fracture of the inner ring 3 can be positively prevented. According to this embodiment, since the area of the encoder 15' can be made large, the attractive forces of magnetic poles N and S can be also increased.

### Fourth embodiment (not forming part of the invention)

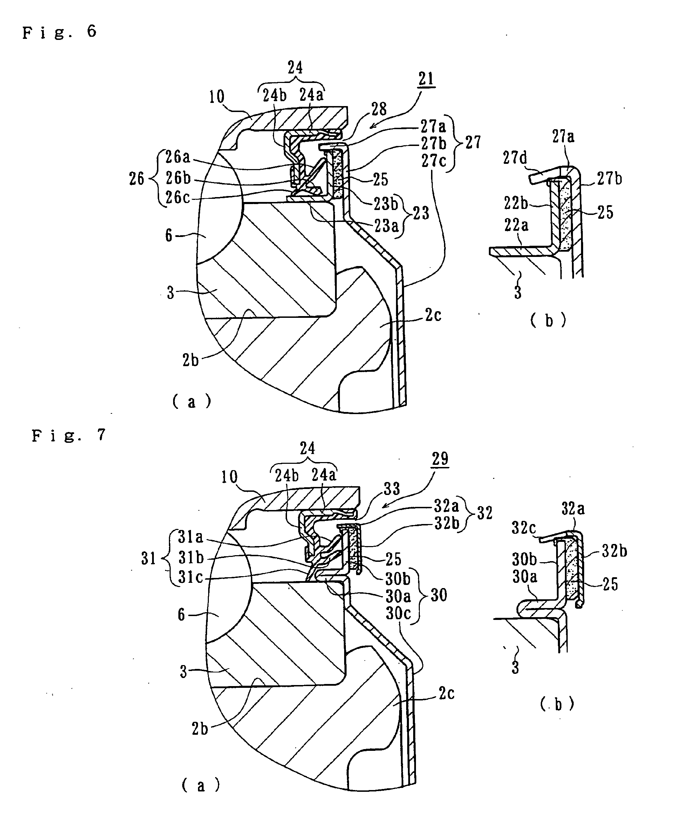

A fourth embodiment of the bearing for a wheel of vehicle is shown in a longitudinal cross-section view of Fig. 5. Fig. 6(a) is a partially enlarged view of Fig. 5. Since difference of this embodiment from the previous embodiments only resides in the structure of the sealing device of inboard side, same numerals are used as those used in the previous embodiments for designating the same structural elements.

As shown in the enlarged view of Fig. 6 (a), the sealing device 21 of inboard side has first and second annular sealing plates 23 and 24 mounted on the inner ring 3 and the outer member 10 respectively. The first sealing plate 23 has a cylindrical portion 23a and a radially extending portion 23b extending radially outward from the end of the cylindrical portion 23a to form a substantially "L" shaped configuration, The first sealing plate 23 is formed by press working of ferromagnetic sheet e.g. ferrite-stainless steel sheet (e.g. JIS SUS 430 etc.) or preserved cold rolled steel sheet (e.g. JIS SPCC etc.). Bonded by vulcanization integrally on the radially extending portion 23b at its inboard side is a magnetic rotary encoder 25 for detecting the speed of wheel rotation made of elastomer material such as rubber or sintered metal including metal binder with which ferromagnetic substance powder such as ferrite is mingled and in which N and S poles are alternately magnetized at a predetermined pitch on the pitch circle diameter (PCD) along the circumferential direction thereof.

The second sealing plate 24 is formed by press working of austenitic-stainless steel sheet (e.g. JIS SUS 304 etc.) or preserved cold rolled steel sheet (e.g. JIS SPCC etc.) and has a cylindrical portion 24a and a radially extending portion 24b extending from the end of the cylindrical portion 24a to form a substantially "L" shaped configuration. Bonded by vulcanization on the second sealing plate 24 is a sealing member 26 integrally formed by side-lip 26a slide-contacting with the radially extending portion 23b of the first sealing plate 23 and a pair of radial-lips 26b and 26c slide-contacting with the outer circumferential surface of the cylindrical portion 23a.

Although it is illustrated the sealing member 26 having the side-lip 26a and a pair of the radial-lips 26 b and 26c, any other structure such as one having a pair of side-lips and a single radial-lip in accordance with objects or a space of the sealing device. In addition, it is also possible to provide a pair of radial-lips and to have one of them directly slide-contacted with the outer circumferential surface of the inner ring 3.

The first sealing plate 23 of this embodiment is provided with a protecting cover 27. The protecting cover 27 is formed by press working of a sheet of non-magnetic material e.g. an austenitic-stainless steel sheet (e.g. JIS SUS 304 etc.) or preserved cold rolled steel sheet (e.g. JIS SPCC etc.). The protecting cover 27 can be made of any non-magnetic material having the surface hardness higher than that of the encoder 25. The protecting cover 27 may be formed of any synthetic resin e.g. polypropylene, polyethylene etc. other than non-magnetic materials mentioned above.

The protecting cover 27 is formed as a cap comprising a cylindrical portion 27 a fitted on the outer circumferential portion of the first sealing plate 23, a radially extending portion 27b radially inwardly extending from the end of the cylindrical portion 27a and intimately contacting with the encoder 25 for covering the surface thereof, and a bottom portion 27c for covering exposed portions of the inner ring 3 and the caulked portion 2c. The cylindrical portion 24a of the second sealing plate 24 and the cylindrical portion 27a of the protecting cover 27 are arranged opposed to each other with keeping a slight radial gap therebetween forming a labyrinth seal 28.

As shown in Fig. 6 (b), it is possible to positively and rigidly secure the protecting cover 27 to the first sealing plate 23 by plastically deforming the tip of the cylindrical portion 27a to form the caulked portion 27d.

According to this embodiment, since the first sealing plate 23 is provided with the cap-shaped protecting cover 27 having the bottom portion 27c in order to cover the fitted portion of the first sealing plate 23 as well as the exposed portions of the inner ring 3 and the caulked portion 2c, the fitted portion, the inner ring 3 as well as the abutted surface between the end of the inner ring 3 and the caulked portion are never exposed to the ambient circumstance. Accordingly, it is possible to prevent generation of delayed fracture due to penetration of the diffusible hydrogen existing in the ambient circumstance into metallographic structure of the inner ring 3 when corrosion would proceed in these portions. In addition, since the surface of the encoder 25 is covered by the radially extending portion 27b of the protecting cover 27 of non-magnetic material, it is possible to prevent damage of the encoder 25 without giving any influence to the accuracy of detection. Furthermore, since the air gap between the encoder 25 and the vehicle speed detecting sensor can be substantially reduced as compared with the structure having the fixed cover mounted on the separate sealing device, it is possible to further improve the accuracy of detection.

### Fifth embodiment

A fifth embodiment of the bearing for a wheel of vehicle is shown in a partially enlarged view of Fig. 5. Since difference of this embodiment from the fourth embodiment (Fig. 6) only resides in the structures of the first sealing plate and the protecting cover, same numerals are used as those used in the first embodiment for designating the same structural elements.

Similarly to the first embodiment, the second sealing plate 24 is mounted on the outer member 10 of the sealing device 29 of inboard side. On the contrary, a first sealing plate 30 is formed as a cap configuration integrally having a folded cylindrical portion 30a, a radially extending portion 30b extending radially outwardly from the end of the cylindrical portion 30a, and a bottom portion 30c for covering the end of the inner ring 3 and the caulked portion 2c. and fitted on the outer circumferential surface of the inner ring 3. The first sealing plate 30 is made by press working of ferrite-stainless steel sheet (e.g. JIS SUS 430 etc.) or preserved cold rolled steel sheet (e.g. JIS SPCC etc.). Bonded by vulcanization integrally on the radially extending portion 30b is an encoder 25 made, e.g. of elastomer material with which magnetic substance powder is mingled.

The second sealing plate 24 has a cylindrical portion 24a and a radially extending portion 24b formed as having a substantially "L" shaped configuration. Bonded by vulcanization on the second sealing plate 24 is a sealing member 31 integrally formed by a pair of side-lips 31a and 31b slide-contacting with the radially extending portion 30b of the first sealing plate 30 and a radial-lip 31c directly slide-contacting with the outer circumferential surface of the inner ring 3. Accordingly, the sealing member 31 makes it possible to positively prevent leakage of grease contained in the bearing as well as penetration of rain water or dusts into the bearing from the ambient circumstance without any restriction as to the bearing space and the configuration or dimension of the sealing plate.

In this embodiment, a protecting cover 32 is mounted on the first sealing plate 30. The protecting cover 32 has a cylindrical portion 32a fitted on the outer circumferential surface of the first sealing plate 30, and a radially extending portion 32b intimately contacting with the encoder 25 for covering the surface thereof and is formed as having a substantially "L"-shaped configuration. The protecting cover 32 is formed by press working of a sheet of non-magnetic material e.g. an austenitic-stainless steel sheet (e.g. JIS SUS 304 etc.) or preserved cold rolled steel sheet (e.g. JIS SPCC etc.). The protecting cover 32 can be made of any non-magnetic material having the surface hardness higher than that of the encoder 25. The protecting cover 27 may be formed of any synthetic resin e.g. polypropylene, polyethylene etc. other than non-magnetic materials mentioned above.

The cylindrical portion 24a of the second sealing plate 24 and the cylindrical portion 32a of the protecting cover 32 are arranged opposed to each other with keeping a slight radial gap therebetween forming a labyrinth seal 28. As shown in Fig. 7 (b), it is possible to positively and rigidly secure the protecting cover 32 to the first sealing plate 30 by plastically deforming the tip of the cylindrical portion 32a to form the caulked portion 32c.

According to this embodiment, since the first sealing plate 30 is formed as the cap-shaped configuration and the exposed portions of the inner ring 3 and the caulked portion 2c are covered by the first sealing plate 30, penetration of rain water or dust into the bearing can be prevented. In addition, since the inner ring 3 as well as the abutted surface between the end of the inner ring 3 and the caulked portion are never exposed to the ambient circumstance, it is possible to prevent generation of the inner ring 3. Accordingly, it is also possible to prevent delayed fracture due to penetration of the diffusible hydrogen existing in the ambient circumstance into metallographic structure of the inner ring 3 when corrosion would proceed in this portion.

In addition, since the surface of the encoder 25 is covered by the radially extending portion 32b of the protecting cover 32 of non-magnetic material, it is possible to prevent damage of the encoder 25 without giving any influence to the accuracy of detection. Furthermore, since the air gap between the encoder 25 and the vehicle speed detecting sensor can be substantially, it is possible to further improve the accuracy of detection.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability to industry

The bearing of a wheel of vehicle of the present invention can be applied to a bearing of a wheel of vehicle of so-called self-retain type in which the inner ring is press-fitted on the stepped portion of small diameter of the hub wheel and the inner ring is secured by the caulked portion of the stepped portion.

## Claims

1. A bearing for a wheel of vehicle comprising an inner member (1) including a hub wheel (2) integrally formed with a wheel mounting flange (4) at one end thereof and also formed with an inner raceway surface (2a) at an outer circumferential surface and a stepped portion (2b) of small diameter axially extending from the inner raceway surface (2a) as well as including an inner ring (3) fitted on the stepped portion (2b) and formed with an another inner raceway surface (3a) at an outer circumferential surface thereof; an outer member (10) integrally formed with a body mounting (10b) at the periphery thereof and also formed with double row outer raceway surfaces (10a) at an inner circumferential surface oppositely to the inner raceway surfaces (2a, 3a); double row rolling elements (6) arranged between the outer and inner members (1, 10); and sealing devices (11, 12) for sealing annular spaces between the outer and inner members (1, 10); the inner ring (3) is secured to the hub wheel (2) so as not to be moved axially relative to the hub wheel (2) by a caulked portion (2c) formed by plastically deforming radially outward the end of the stepped portion (2b) of small diameter of the hub wheel (2),
a sealing device of inboard side (12) of the sealing devices (11, 12) comprising a first sealing plate (13, 13', 19, 30) arranged on the inner ring (3) and a second sealing plate (14, 24) arranged on the outer member (10) oppositely to the first sealing plate (13, 13',19, 30); the first sealing plate (13, 13', 19, 30) has a radially extending portion (13b, 30b) arranged at inboard side of the bearing; bonded on the radially extending portion (13b, 30b) of the first sealing plate (13, 13', 19, 30) is elastomer material with which magnetic substance powder is mingled and in which N and S poles are alternately magnetized along the circumferential direction thereof; the second sealing plate (14, 24) has a substantially "L"-shaped cross-section formed by a cylindrical portion (14a, 24a) and a radially extending portion and is integrated with side-lip(s) (16a, 16b, 31a, 31b) slide-contacting with the radially extending portion (13b, 30b) of the first sealing plate (13, 13', 19, 30); the tip of the radially extending portion (13b, 30b) of the first sealing plate (13, 13', 19, 30) is positioned with keeping a slight radial gap relative to the cylindrical portion (14, 24a) of the second sealing plate (14, 24); **characterised in that** the exposed portion of the inner ring (3) is covered by the first sealing plate (13, 13',19, 30).

2. A bearing for a wheel of vehicle of claim 1 wherein the first sealing plate (13) is formed as a cap having a fitted portion to be press-fitted on the outer circumferential surface of the inner ring (3) and a bottom portion for covering the caulked portion (2c).

3. A bearing for a wheel of vehicle of claim 1 wherein the first sealing plate (19) is formed as a disk configuration (19) to be abutted to the end face of the inner ring (3) and is secured thereto by the caulked portion (2c) of the hub wheel (2).

4. A bearing for a wheel of vehicle of claim 1 wherein the first sealing plate (13') has a fitted portion (13a) to be press-fitted on the outer circumferential surface of the inner ring (3) and a fixed portion (13c') to be secured to the end face of the inner ring (3) by the caulked portion (2c) of the hub wheel (2), and a recess for containing the fixed portion is formed on the caulked portion (2c).

5. A bearing for a wheel of vehicle of any one of claims 1 through 4 wherein the elastomer material (15) is bonded to the first sealing plate (13, 13', 19, 30) over a region from the radially outermost end of the radially extending portion (13b, 30b) to a point of radially inward beyond the outer circumferential surface of the inner ring (3).

6. A bearing for a wheel of vehicle of claim 1 wherein a protecting cover (32) is mounted on the first sealing plate (30) so that it intimately contacts with the surface of the encoder (25); the protecting cover (32) is positioned with keeping a slight radial gap relative to the cylindrical portion (24a) of the second sealing plate (24); the first sealing plate (30) is formed as a cap integrally formed with a cylindrical portion (30a) formed by folding a portion of the radially extending portion (30b) and being mounted on the outer circumferential surface of the inner ring (3), and a bottom portion (30c) for covering the caulked portion.

7. A bearing for a wheel of vehicle of claim 6 wherein the protecting cover (32) has a cylindrical portion (32a) mounted on the outer circumferential surface of the first sealing plate (30) and a radially extending portion (32b) extending radially inward from the end of the cylindrical portion (32a) and contacted with the surface of the encoder (25).

8. A bearing for a wheel of vehicle of claim 7 wherein the protecting cover (32) is secured to the first sealing plate (30) by a caulked portion (32c) formed on the cylindrical portion (32a) of the protecting cover (32).

9. A bearing for a wheel of vehicle of any one of claims 6 through 8 wherein the protecting cover (32) is formed by press forming of a non-magnetic steel sheet.

10. A bearing for a wheel of vehicle of any one of claims 6 through 9 wherein the protecting cover (32) is formed by injection molding of synthetic resin.

11. A bearing for a wheel of vehicle of any one of claims 1 through 10 wherein the second sealing plate (14, 24) is integrally formed with radial-lip(s) (16c, 31c) directly slide-contacting with the outer circumferential surface of the inner ring (3).

## Patentansprüche

1. Lager für ein Fahrzeugrad, umfassend ein inneres Element (1), das ein Nabenrad (2) enthält, das an seinem einen Ende mit einem Radmontageflansch (4) integral ausgebildet ist und auch mit einer inneren Kugellagerringfläche (2a) an einer äußeren Umfangsfläche und einem gestuften Abschnitt (2b) mit kleinem Durchmesser, der sich axial von der inneren Kugellagerringfläche (2a) erstreckt, ausgebildet ist, und das einen inneren Ring (3) enthält, der auf dem gestuften Abschnitt (2b) angebracht ist und mit einer weiteren inneren Kugellagerringfläche (3a) an dessen äußeren Umfangsfläche ausgebildet ist; ein äußeres Element (10), das an dessen Umfang integral mit einer Karosseriehalterung (10b) ausgebildet ist und auch mit doppelreihigen Kugellagerringflächen (10a) an einer inneren Umfangsfläche gegenüberliegend von den inneren Kugellagerringflächen (2a, 3a) ausgebildet ist; doppelreihige Wälzelemente (6), die zwischen dem inneren und äußeren Element (1, 10) angeordnet sind; und Dichtungsmittel (11, 12) zur Abdichtung ringförmiger Räume zwischen dem inneren und äußeren Element (1, 10); wobei der innere Ring (3) an dem Nabenrad (2) durch einen verstemmten Abschnitt (2c), der durch plastisches Verformen des Endes des gestuften Abschnittes (2.b) mit kleinem Durchmesser des Nabenrades (2) nach außen gebildet ist, festgehalten wird, um nicht axial bezüglich des Nabenrades bewegt zu werden, wobei eine Dichtungsvorrichtung an der nach innen gerichteten Seite (12) der Dichtungsvorrichtungen (11, 12) eine erste, am inneren Ring (3) angeordnete Dichtungsplatte (13, 13', 19, 30) und eine zweite, am äußeren Element (10) gegenüberliegend der ersten Dichtungsplatte (13, 13', 19, 30) angeordnete zweite Dichtungsplatte (14, 24) umfasst; die erste Dichtungsplatte (13, 13', 19, 30) an nach innen gerichteter Seite des Lagers einen sich radial erstreckenden Abschnitt (13b, 30b) besitzt; mit dem sich radial nach außen erstreckenden Abschnitt (13b, 30b) der ersten Dichtungsplatte (13, 13', 19, 30) elastomeres Material verbunden ist, mit dem Magnetsubstanzpulver vermischt ist und in dem N- und S-Pole entlang dessen Umfangsrichtung abwechselnd magnetisiert werden; die zweite Dichtungsplatte (14, 24) einen im wesentlichen L-förmigen Querschnitt besitzt, der von einem zylindrischen Abschnitt (14a, 24b) und einem sich radial erstreckenden Abschnitt (13b, 30b) gebildet wird, und Seitenlippe(n) (16a, 16b, 31a, 31b) in sich vereinigt, die mit dem sich radial erstreckenden Abschnitt (13b, 30b) der ersten Dichtungsplatte (13, 30, 19, 30) gleitend in Kontakt stehen; wobei die Spitze des sich radial erstreckenden Abschnitts (13b, 30b) der ersten Dichtungsplatte(13, 13', 19, 30) unter Einhaltung eines kleinen radialen Spalts bezüglich des zylindrischen Abschnittes (14, 24a) der zweiten Dichtungsplatte (14, 24) positioniert ist; **dadurch gekennzeichnet, dass** der exponierte Abschnitt des inneren Rings (3) von der ersten Dichtungsplatte (13, 13', 19, 30) abgedeckt ist.

2. Lager für ein Fahrzeugrad nach Anspruch 1, wobei die erste Dichtungsplatte (13) als eine Kappe ausgebildet ist, mit einem eingebauten Abschnitt, der auf der äußeren Umfangsfläche des inneren Rings (3) aufzupressen ist, und einem Bodenabschnitt zum Abdecken des verstemmten Abschnittes (2c).

3. Lager für ein Fahrzeugrad nach Anspruch 1, wobei die erste Dichtungsplatte (19) als eine Scheibenkonfiguration (19) ausgebildet ist, die an die Endfläche des inneren Rings (3) anzustoßen ist, und daran durch den verstemmten Abschnitt (2c) des Nabenrades (2) befestigt wird.

4. Lager für ein Fahrzeugrad nach Anspruch 1, wobei die erste Dichtungsplatte (13') einen eingebauten Abschnitt (13a), der auf der äußeren Umfangsfläche des inneren Rings (3) aufzupressen ist, und einen befestigten Abschnitt (13c') besitzt, der an der Endfläche des inneren Rings (3) durch den verstemmten Abschnitt (2c) des Nabenrades (2) festzuhalten ist, und eine Vertiefung zur Aufnahme des befestigten Abschnittes an dem verstemmten Abschnitt (2c) ausgebildet ist.

5. Lager für ein Fahrzeugrad nach einem der Ansprüche 1 bis 4, wobei das elastomere Material (15) über einen Bereich vom radial äußersten Ende des sich radial erstreckenden Abschnittes (13b, 30b) bis zu einem Punkt radial einwärts über die äußere Umfangsfläche des inneren Rings (3) hinaus mit der ersten Dichtungsplatte (13, 13' , 19, 30) verbunden ist.

6. Lager für ein Fahrzeugrad nach Anspruch 1, wobei eine Schutzabdeckung (32) an der ersten Dichtungsplatte (30) befestigt ist, so dass sie mit der Oberfläche des Impulsgebers (25) innig in Kontakt steht; die Schutzkappe (32) unter Einhaltung eines geringen radialen Spaltes bezüglich des zylindrischen Abschnittes (24a) der zweiten Dichtungsplatte (24) positioniert ist; die erste Dichtungsplatte (30) als eine Kappe gebildet ist, die mit einem zylindrischen Abschnitt (24a), der durch Falten eines Abschnittes des sich radial erstreckenden Abschnittes (30b) gebildet wird und auf der äußeren Umfangsfläche des inneren Rings (3) befestigt ist, und einem Bodenabschnitt (30c) zum Abdecken des verstemmten Abschnittes ausgebildet ist.

7. Lager für ein Fahrzeugrad nach Anspruch 6, wobei die Schutzabdeckung (32) einen an der äußeren Umfangsfläche der ersten Dichtungsplatte (30) befestigten zylindrischen Abschnitt (32a) und einen sich radial erstreckenden Abschnitt (32b) besitzt, der sich vom Ende des zylindrischen Abschnittes (32a) radial nach innen erstreckt und mit der Fläche des Impulsgebers (25) in Verbindung steht.

8. Lager für ein Fahrzeugrad nach Anspruch 7, wobei die Schutzabdeckung (32) an der ersten Dichtungsplatte (30) durch einen verstemmten Abschnitt (32c) festgehalten wird, der an dem zylindrischen Abschnitt (32a) der Schutzabdeckung (32) ausgebildet ist.

9. Lager für ein Fahrzeugrad nach einem der Ansprüche 6 bis 8, wobei die Schutzabdeckung (32) durch Pressformen eines nichtmagnetischen Stahlblechs gebildet wird.

10. Lager für ein Fahrzeugrad nach einem der Ansprüche 6 bis 9, wobei die Schutzabdeckung (32) durch Spritzgießen von Kunstharz gebildet wird.

11. Lager für ein Fahrzeugrad nach einem der Ansprüche 1 bis 10, wobei die zweite Dichtungsplatte (14, 24) integral mit Radial-Lippe(n) (16c, 31c) ausgebildet ist, die direkt mit der äußeren Umfangsfläche des inneren Rings (3) gleitend in Kontakt stehen.

## Revendications

1. Palier pour roue de véhicule, qui comprend un élément intérieur (1) qui inclut une roue (2) de moyeu formée d'un seul tenant avec une bride (4) de montage de roue à une de ses extrémités et configuré également avec une surface intérieure (2a) de piste de roulement sur sa surface périphérique extérieure et une partie (2b) en gradin de petit diamètre qui s'étend axialement depuis la surface intérieure (2a) de piste de roulement, et qui comprend une bague intérieure (3) ajustée sur la partie en gradin (2b) et configurée avec une autre surface intérieure (3a) de piste de roulement sur sa surface périphérique extérieure, un élément extérieur (10) formé d'un seul tenant avec un support de corps (10b) à sa périphérie et également configuré avec des surfaces extérieures (10a) de piste de roulement en double rangée sur la surface périphérique intérieure face aux surfaces intérieures (2a, 3a) de piste de roulement, des éléments de roulement (6) en double rangée agencés entre l'élément extérieur et l'élément extérieur (1, 10), la bague intérieure (3) étant fixée sur la roue de moyeu (2) de manière à ne pas pouvoir se déplacer axialement par rapport à la roue de moyeu (2) grâce à une partie rendue rugueuse (2c) formée en déformant plastiquement et radialement vers l'extérieur l'extrémité de la partie en gradin (2b) de petit diamètre de la roue de moyeu (2), un dispositif d'étanchéité situé sur le côté intérieur (12) de dispositifs d'étanchéité (11, 12) et comprenant une première plaque d'étanchéité (13, 13', 19, 30) agencée sur la bague intérieure (3) et une deuxième plaque d'étanchéité (14, 24) agencée sur l'élément extérieur (10) face à la première plaque d'étanchéité (13, 13', 19, 30), la première plaque d'étanchéité (13, 13', 19, 30) présentant une partie (13b, 30b) qui s'étend radialement et disposée sur le côté intérieur du palier, un matériau élastomère mélangé à une poudre de substance magnétique et dans lequel les pôles nord et sud sont magnétisés en alternance dans la direction périphérique étant relié à la partie (13b, 30b) qui s'étend radialement de la première plaque d'étanchéité (13, 13', 19, 30), la deuxième plaque d'étanchéité (14, 24) ayant une section transversale essentiellement en forme de "L" formée par une partie cylindrique (14a, 24a) et une partie (14b, 24b) qui s'étend radialement et formée d'un seul tenant avec une ou plusieurs lèvres latérales (16a, 16b, 31a, 31b) en contact coulissant avec la partie (13b, 30b) qui s'étend radialement de la première plaque d'étanchéité (13, 13', 19, 30), la pointe de la partie (13b, 30b) qui s'étend radialement de la première plaque d'étanchéité (13, 13', 19, 30) étant placée en maintenant un petit interstice radial par rapport à la partie cylindrique (14, 24a) de la deuxième plaque d'étanchéité (14, 24),
**caractérisé en ce que** la partie laissée nue de la bague intérieure (3) est recouverte par la première plaque d'étanchéité (13, 13', 19, 30).

2. Palier pour roue de véhicule selon la revendication 1, dans lequel la première plaque d'étanchéité (13) est configurée comme capuchon doté d'une partie ajustée destinée à être ajustée par poussée sur la surface périphérique extérieure de la bague intérieure (3) et d'une partie de base destinée à recouvrir la partie rendue rugueuse (2c).

3. Palier pour roue de véhicule selon la revendication 1, dans lequel la première plaque d'étanchéité (19) est configurée en disque (19) qui vient buter contre la surface d'extrémité de la bague intérieure (3) et qui y est fixé par la partie rendue rugueuse (2c) de la roue de moyeu (2).

4. Palier pour roue de véhicule selon la revendication 1, dans lequel la première plaque d'étanchéité (13') présente une partie ajustée (13a) destinée à être ajustée par poussée sur la surface périphérique extérieure de la bague intérieure (3) et une partie fixe (13c') destinée à être fixée sur la surface d'extrémité de la bague intérieure (3) par la partie rendue rugueuse (2c) de la roue de moyeu (2), un creux destiné à contenir la partie fixe étant formé sur la partie rendue rugueuse (2c).

5. Palier pour roue de véhicule selon l'une quelconque des revendications 1 à 4, dans lequel le matériau élastomère (15) est relié à la première plaque d'étanchéité (13, 13', 19, 30) dans une région qui s'étend depuis l'extrémité située radialement à l'extérieur de la partie (13b, 30b) qui s'étend radialement jusqu'à un point situé radialement à l'intérieur au-delà de la surface périphérique extérieure de la bague intérieure (3).

6. Palier pour roue de véhicule selon, la revendication 1, dans lequel un capot de protection (32) est monté sur la première plaque d'étanchéité (30) de manière à être en contact intime avec la surface de l'encodeur (25), le capot de protection (32) étant placé en maintenant un léger jeu radial par rapport à la partie cylindrique (24a) de la deuxième plaque d'étanchéité (24), la première plaque d'étanchéité (30) étant configurée sous la forme d'un capuchon formé d'un seul tenant avec une partie cylindrique (30a) formée en rabattant une partie de la partie (30b) qui s'étend radialement et étant montée sur la surface périphérique extérieure de la bague intérieure (3), et une partie de base (30c) qui recouvre la partie rendue rugueuse.

7. Palier pour roue de véhicule selon la revendication 6, dans lequel le capot de protection (32) présente une partie cylindrique (32a) montée sur la surface périphérique extérieure de la première plaque d'étanchéité (30) et une partie (32b) qui s'étend radialement vers l'intérieur partant de l'extrémité de la partie cylindrique (32a) et en contact avec la surface de l'encodeur (25).

8. Palier pour roue de véhicule selon la revendication 7, dans lequel le capot de protection (32) est fixé sur la première plaque d'étanchéité (30) par une partie rendue rugueuse (32c) formée sur la partie cylindrique (32a) du capot de protection (32).

9. Palier pour roue de véhicule selon l'une quelconque des revendications 6 à 8, dans lequel le capot de protection (32) est formé en façonnant à la presse une tôle d'acier non magnétique.

10. Palier pour roue de véhicule selon l'une quelconque des revendications 6 à 9, dans lequel le capot de protection (32) est formé par moulage par injection de résine synthétique.

11. Palier pour roue de véhicule selon l'une quelconque des revendications 1 à 10, dans lequel la deuxième plaque d'étanchéité (14, 24) est formée d'un seul tenant avec une ou plusieurs lèvres radiales (16c, 31c) qui sont en contact coulissant direct avec la surface périphérique extérieure de la bague intérieure (3).
